# EUROPEAN PATENT SPECIFICATION

(11) **EP 0 997 413 B1**
(45) Date of publication and mention of the grant of the patent: **26.11.2003**
(21) Application number: 98610032.9
(22) Date of filing: 02.09.1998
(51) Int. Cl.: B65H 18/14, B65H 35/02, B65H 18/20, B29C 44/56

(54) **A process and a plant for manufacturing disposable wash cloths and wash cloths**
Verfahren und Vorrichtung zur Herstellung von Wegwerfreinigungstüchern und so hergestellte Reinigungstücher
Procédé et installation pour la fabrication de tissus de nettoyage à jeter et tissus de nettoyage ainsi obtenus

(43) Date of publication of application: 03.05.2000
(73) Proprietor: B6 A/S, 9300 Saeby (DK)
(72) Inventor: Ove, Fabricius, 9300 Saeby (DK)
(74) Representative: Nielsen, Leif

(56) References cited:
- EP-A- 0 842 881
- DE-A- 2 819 919
- US-A- 3 944 150

## Description

The invention relates to a method and a system for making disposable wash cloths of polyurethane foam by cutting these from layers of material having a thickness corresponding to the desired thickness of the wash cloths, and packaging these in a predetermined number. The invention also relates to disposable wash cloths of polyurethane foam made by the method or in the system.

In the prior art methods of making wash cloths quadrangular blocks of polyurethane foam are used from which the polyurethane foam is cut from the top in slices corresponding to the desired thickness of the wash cloths. The cut slices are fed manually in small bundles to a cutting machine. A number of slices corresponding to the number of wash cloths desired in a package is collected there, and then the wash cloths are cut from the slices to their final size, following which they are fed to a third machine for packaging into consumer packages. To reduce the volume of the packages, the wash cloths may be compressed in connection with the packaging.

The object of the invention is to simplify the production of disposable wash cloths and to provide the possibility of producing these wash cloths in another form.

This is achieved according to the invention by a method which is characterized by using continuous webs of material which are rolled-up in a length corresponding to the desired number of wash cloths in a package, cutting the web of material, prior to or after the rolling-up, longitudinally in widths corresponding to the one desired edge length of the wash cloth, and providing the web of material, prior to the rolling-up, with transverse tear-off perforations having a mutual distance corresponding to the other edge length of the wash cloths, and finally packaging the wash cloths in the rolled-up state.

The continuous webs of material may be cut from cylindrical moulded blocks of polyurethane foam having an embedded liner for a drive shaft.

This method provides a considerably simplified production process since the wash cloths may be produced continuously. For example, the cumbersome manual handling of material is avoided, just as the method is not tied down to limited lengths of material. The method also opens up the possibility of producing the wash cloths in rolls. With this end in view, it is expedient to provide the web of material with perforations having a mutual distance which corresponds to the desired length of the wash cloths.

The invention also relates to a system for making disposable wash cloths of polyurethane foam by cutting these from layers of material having a thickness corresponding to the desired thickness of the wash cloths, and packaging these in a predetermined number, said system being characterized in that it comprises a rolling-up unit for rolling-up continuous webs of material in lengths corresponding to the desired number of wash cloths in a package, and a marking unit for providing the web of material with transverse tear-off perforations having a mutual distance corresponding to the one edge length of the wash cloths, as well as a cutting unit for cutting the web of material, prior to or after the rolling-up, longitudinally in widths corresponding to the other desired edge length of the wash cloths, and finally a packaging unit for packaging the wash cloths in the rolled-up state.

The system may additionally comprise a peeling-off unit for peeling a continuous web of material off cylindrical moulded blocks of polyurethane foam having an embedded liner for a drive shaft.

The invention thus provides a system which can produce disposable wash cloths in an uninterruptedly proceeding process. This results in a saving of raw material and better temporal efficiency. Furthermore, the production of wash cloths by this technique will give a better utilization of the floor area at disposal.

The necessary thickness of the polyurethane foam is provided by a band knife whose transverse movement is adapted to the speed of rotation of the polyurethane foam block.

The cylindrical block of raw material rotates at a speed which, at any time, is in accordance with the diameter of the block concerned. The thickness of the wash cloths is determined by the advancing speed of the band knife. The cut raw material is fed inwardly between the guide rollers of the system. From there, the web of raw material is fed to the three rollers of the rolling-up section, of which one is of such a type that it provides the web of raw material with tear-off perforations while it is being rolled on to an automatically advanced core tube, preferably a cardboard tube. When the desired amount has been rolled on to the cardboard tube, the rolling-up operation is stopped, and cardboard tubes with rolled-up raw material are fed for packaging in plastics sheet. The plastics sheet is welded together, and the packaged roll is fed to the severing section where it is severed to final consumer sizes by a multi-bladed rotating knife.

One of the rollers in the rolling-up section is of such a type that the material rolled-up is provided with tear-off perforations. As a result, the desired size of the produced wash cloths is obtained without further handling and working processes.

Between the rolling-up section and the severing section there is incorporated a packaging section of such a type that packaging of the finished product is performed automatically and in step with the production, which gives a greater temporal efficiency.

The invention moreover relates to disposable wash cloths of polyurethane foam produced by the method or in the system according to the invention, said disposable wash cloths being characterized by being rolled-up and provided with tear-off perforations, and packed in the rolled-up state.

The invention will be explained more fully below with reference to the drawing. In the drawing:
Fig. 1 shows a system for making disposable wash cloths,
fig. 2 shows another embodiment of a system for making disposable wash cloths, seen from the side,
fig. 3 shows the system of fig. 2, seen from above, and
fig. 4 shows a roll of disposable wash cloths with an unreeled length of wash cloths.

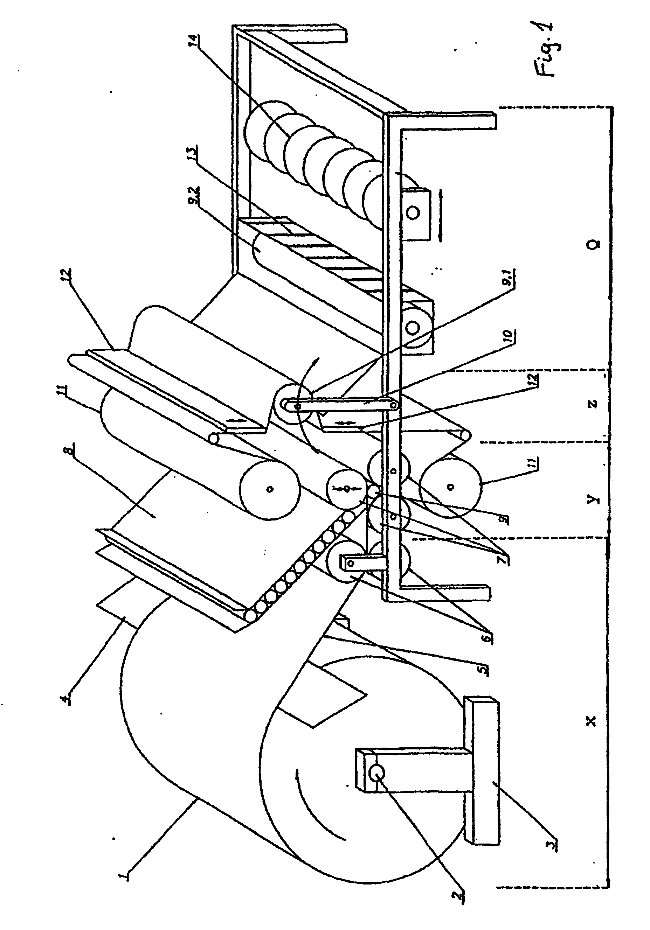

Fig. 1 shows a basic view of a system for making disposable wash cloths having a raw material section X, a rolling-up section Y, a packaging section Z and a severing section Q. The raw material 1 is a cylindrical moulded block of polyurethane foam having a length of 2 metres and a diameter of 2 metres, with an embedded bushing for the mounting of a drive shaft 2. The drive shaft and a suspension 3 for it are constructed in such a manner that a new block of raw material can be inserted easily and quickly. 4 shows a section of a band knife connected with the system in such a manner that when the block of raw material has rotated one turn, the band knife has moved a distance corresponding to the thickness of a wash cloth inwardly toward the centre of the block of raw material. The material 5 cut from the block of raw material is fed inwardly between guide rollers 6 in the system. The speed of rotation of the guide rollers and the speed of rotation of the block of raw material must be controlled in such a manner that the peripheral speed of the guide rollers must be the same as the peripheral speed of the block of raw material, about 60 metres/minute.

The cut raw material 5 is fed from the guide rollers to a rolling-up section which consists of three rollers 7 and a feed chute 8 for cardboard tubes. The rolling-up section is constructed in such a manner that the upper one is movable up and down in step with the amount of material which has been rolled on to a cardboard tube 9. One of the rollers 7 is constructed in such a manner that it provides the rolled-up material with tear-off perforations in such a manner that the distance between the perforations corresponds to the length of a wash cloth. When the desired amount of material has been rolled on to a cardboard tube 9, the rotation of the guide rollers 6 and of the block of raw material 1 is stopped. An ejector system 10 descends and grips the filled roller and moves it to the position shown in fig. 1. A new cardboard tube is simultaneously fed to the rolling-up section, and a new rolling-up operation begins. The filled cardboard tube 9,1 is enclosed by a plastics sheet 11, as welding jaws 12 are moved together and package the wound cardboard tube 9,1. After welding of the packaged material it is conveyed by the ejector system 10 to a severing section. Then the ejector system returns to its starting position and waits for a new cardboard tube to be wound. The rolled-up and packaged material 9,2 is now present in the severing station in a trough with slits 13, at a mutual distance corresponding to the width of a wash cloth. A plurality of rotating knives 14 having a mutual distance corresponding to the distance between the slits 13 are now advanced and sever the packaged material 9,2 to packaged consumer packages of disposable wash cloths.

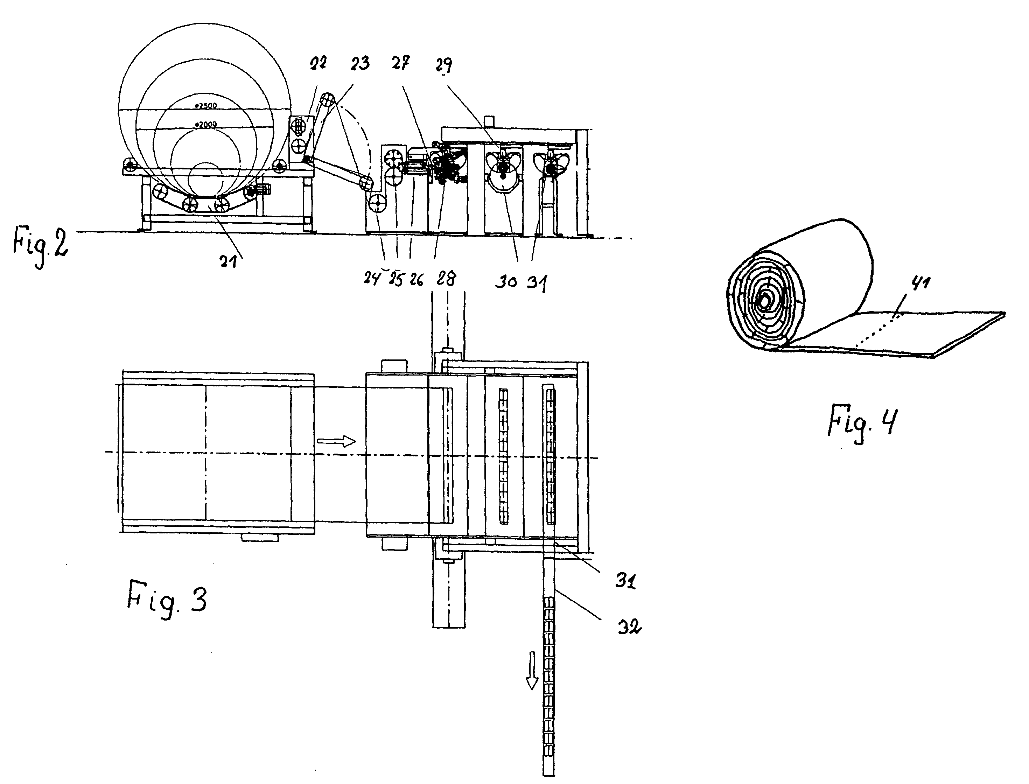

Figs. 2 and 3 of the drawing show a basic view of another embodiment of a system for making wash cloths.

As will appear, the system comprises a cradle 21 for a roll of a continuous web of material. From there, the web of material is conveyed via web guides 22 to a dancing roller 23 and a drive roller 24 and further on to a perforation roller 25. From there, the web of material is conveyed further on by a transfer belt 26 until it reaches a set of jaws 27 for tearing the web. Next in line is a rolling-up unit 28 followed by a unit 29 (Pick & Place with roll catcher) which transfers the roll to a severing unit 30. Next in line are a discharge belt 31 and an acceleration belt 32 which conveys the severed roll to a packaging machine. The web of material is conveyed to the rolling-up section, and when the desired length of the web of material has been rolled-up, the web is torn by the set of jaws. Severing and transfer to the packaging machine are then performed.

Preferred sizes of the wash cloths are:
cm 10 x 12 (alternatively 15, 18 or 20)
cm 12 x 12 (alternatively 15, 18 or 20)
cm 15 x 15 (alternatively 18 or 20)
cm 20 x 10 (alternatively 15, 18 or 20)

The thickness is selected from the following measures cm 0.2; 0.35; 0.4; 0.5; 0.7; 1.0.

It is noted that the wash cloths may also be impregnated. with e.g. soap or perfume.

Fig. 4 of the drawing shows a finished roll of wash cloths with an unreeled length of these. The employed package, which has been removed, is a completely tight package which keeps the wash cloths dry and free of dirt during transport and storage. A tear-off perforation is indicated at 41.

## Claims

1. A method of making disposable wash cloths of polyurethane foam by cutting these from layers of material (5) having a thickness corresponding to the desired thickness of the wash cloths, and packaging these in a predetermined number, characterized by using continuous webs of material (5) which are rolled-up in a length corresponding to the desired number of wash cloths in a package, cutting the web of material, prior to or after the rolling-up, longitudinally in widths corresponding to the one desired edge length of the wash cloths, and providing the web of material, prior to the rolling-up, with transverse tear-off perforations (41) having a mutual distance corresponding to the other edge length of the wash cloths, and finally packaging the wash cloths in the rolled-up state.

2. A method according to claim 1, **characterized by** peeling the continuous web of material (5) from cylindrical moulded blocks of polyurethane foam (1) having an embedded liner for a drive shaft (2).

3. A method according to claim 1, **characterized by** rolling the continuous web of material (5) on to cardboard tubes (9).

4. A system for making disposable wash cloths of polyurethane foam by cutting these from layers of material (5) having a thickness corresponding to a desired thickness of the wash cloths, and packaging these in a predetermined number, **characterized in that** it comprises a rolling-up unit (Y) for rolling-up continuous webs of material (5) in lengths corresponding to the desired number of wash cloths in a package, and a marking unit (7) for providing the web of material with transverse tear-off perforations (41) having a mutual distance corresponding to the one edge length of the wash cloths, and a cutting unit for cutting the web of material, prior to or after the rolling-up, longitudinally in widths corresponding to the other desired edge length, of the wash cloths, and finally a packaging unit for packaging the wash cloths in the rolled-up state.

5. A system according to claim 4, **characterized in that** it comprises a peeling-off unit (4) for peeling a continuous web of material off cylindrical moulded blocks of polyurethane foam (1) having an embedded liner for a drive shaft (2).

6. A system according to claim 4, **characterized in that** the rollers (7) in the rolling-up section (Y) provide the material rolled on to a cardboard tube (9) with tear-off perforations (41).

7. A system according to claim 4, 5 or 6, **characterized in that** the rolled-up material is packaged, while an ejector system (10) conveys the rolled-up material to the severing section (Q).

8. A system according to claim 4, 5, 6 or 7, **characterized in that** the rolled-up, packaged and severed material is identical with the final consumer package of disposable wash cloths.

9. Disposable wash cloths of polyurethane foam made by the method or in the system according to any one of the preceding claims, **characterized in that** the disposable wash cloths are provided with tear-off perforations (41), rolled-up and packed in said rolled-up state.

## Patentansprüche

1. Verfahren zum Herstellen von Einwegwaschtüchem aus Polyurethanschaum durch Abschneiden derselben von Materialschichten (5) mit einer der gewünschten Dicke der Waschtücher entsprechenden Dicke, und Verpacken derselben in einer vorbestimmten Anzahl, **gekennzeichnet durch** das Verwenden von zusammenhängenden Materialnetzen (5), weiche in einer der gewünschten Anzahl von Waschtüchem in einer Packung entsprechenden Länge aufgerollt werden, in Längsrichtung Zerschneiden des Netzmaterials in der einen gewünschten Kantenlänge der Waschtücher entsprechenden Breiten vor oder nach dem Aufrollen, und Versehen des Netzmaterials mit quer verlaufenden Abreißperforierungen (41) mit einem der anderen Kantenlänge der Waschtücher entsprechenden gegenseitigen Abstand vor dem Aufrollen, und schließlich Verpacken der Waschtücher in dem aufgerollten Zustand.

2. Verfahren nach Anspruch 1, **gekennzeichnet durch** Abschälen des zusammenhängenden Materialnetzes (5) von eine eingebettete Buchse für eine Antriebswelle (2) aufweisenden zylindrischen geformten Blöcken aus Polyurethanschaum (1).

3. Verfahren nach Anspruch 1, **gekennzeichnet durch** das Aufrollen des zusammenhängenden Materialnetzes (5) auf Pappkartonröhren (9).

4. System zum Herstellen von Einwegwaschtüchern aus Polyurethanschaum durch Abschneiden derselben von Materialschichten (5) mit einer der gewünschten Dicke der Waschtücher entsprechenden Dicke, und Verpacken derselben in einer vorbestimmten Anzahl, **dadurch gekennzeichnet, dass** es eine Aufrolleinheit (Y) zum Aufrollen zusammenhängender Materialnetze (5) in der gewünschten Anzahl von Waschtüchern in einer Packung entsprechenden Längen, und eine Markiereinheit (7) zum Versehen des Materialnetzes mit quer verlaufenden Abreißperforierungen (41) mit einem der einen Kantenlänge der Waschtücher entsprechenden gegenseitigen Abstand, und eine Schneideeinheit zum in Längsrichtung Zerschneiden des Materialnetzes in der anderen gewünschten Kantenlänge der Waschtücher entsprechenden Breiten vor oder nach dem Aufrollen, und schließlich eine Verpackungseinheit zum Verpacken der Waschtücher in dem aufgerollten Zustand aufweist.

5. System nach Anspruch 4, **dadurch gekennzeichnet, dass** es eine Abschäleinheit (4) zum Abschälen eines zusammenhängenden Materialnetzes von eine eingebettete Buchse für eine Antriebswelle (2) aufweisenden zylindrisch geformten Blöcken aus Polyurethanschaum (1) aufweist.

6. System nach Anspruch 4, **dadurch gekennzeichnet, dass** die Walzen (7) in dem Aufrollabschnitt (Y) das auf eine Pappkartonröhre aufgerollte Material mit Abreißperforierungen (41) versehen.

7. System nach Anspruch 4, **dadurch gekennzeichnet, dass** das aufgerollte Material verpackt wird, während ein Auswurfsystem (10) das aufgerollte Material zum Abtrennabschnitt (Q) fördert.

8. System nach Anspruch 4, 5, 6, oder 7, **dadurch gekennzeichnet, dass** das aufgerollte, verpackte und abgetrennte Material mit dem Verbraucherendpaket Einwegwaschtücher identisch ist.

9. Einwegwaschtücher aus Polyurthanschaum, hergestellt mittels des Verfahrens oder in dem System nach einem der vorstehenden Ansprüche, **dadurch gekennzeichnet, dass** die Einwegwaschtücher mit Abreißperforierungen (41) versehen sind, aufgerollt sind und in dem aufgerollten Zustand verpackt sind.

## Revendications

1. Procédé pour réaliser des tissus de nettoyage jetables en mousse de polyuréthane en découpant ceux-ci à partir de couches de matière (5) ayant une épaisseur correspondant à l'épaisseur souhaitée des tissus de nettoyage, et en emballant ceux-ci en un nombre prédéterminé,
**caractérisé par** l'utilisation de bandes continues de matière (5) qui sont enroulées en une longueur correspondant au nombre souhaité de tissus de nettoyage dans un emballage, la découpe de la bande de matière, avant ou après l'enroulement, longitudinalement en largeurs correspondant à une longueur de bord souhaitée des tissus de nettoyage, et le fait de munir la bande de matière, avant l'enroulement, de perforations de déchirure transversales (41) ayant une distance mutuelle correspondant à l'autre longueur de bord des tissus de nettoyage, et finalement l'emballage des tissus de nettoyage dans l'état enroulé.

2. Procédé selon la revendication 1,
**caractérisé par** le pelage de la bande continue de matière (5) à partir de blocs moulés cylindriques de mousse (1) de polyuréthane ayant un revêtement noyé pour un arbre d'entraînement (2).

3. Procédé selon la revendication 1,
**caractérisé par** le roulage de la bande continue de matière (5) sur des tubes (9) en carton.

4. Système pour réaliser des tissus de nettoyage jetables en mousse de polyuréthane en découpant ceux-ci à partir de couches de matière (5) ayant une épaisseur correspondant à l'épaisseur souhaitée des tissus de nettoyage et en emballant ceux-ci en un nombre prédéterminé,
**caractérisé en ce qu'**il comprend une unité d'enroulement (Y) pour enrouler des bandes continues de matière (5) en des longueurs correspondant au nombre souhaité de tissus de nettoyage dans un emballage, et une unité de marquage (7) pour munir la bande de matière de perforations de déchirure transversales (41) ayant une distance mutuelle correspondant à une longueur de bord des tissus de nettoyage, et une unité de découpe pour découper la bande de matière, avant ou après l'enroulement, longitudinalement en largeurs correspondant à l'autre longueur de bord souhaitée des tissus de nettoyage, et, enfin, une unité d'emballage pour emballer les tissus de nettoyage dans l'état enroulé.

5. Système selon la revendication 4,
**caractérisé en ce qu'**il comprend une unité de pelage (4) pour peler une bande continue de matière de blocs moulés cylindriques de mousse de polyuréthane (1) ayant un revêtement noyé pour un arbre d'entraînement (2).

6. Système selon la revendication 4,
**caractérisé en ce que** les rouleaux (7) dans la section d'enroulement (Y) munissent la matière enroulée sur un tube en carton (9) de perforations de déchirement (41 ).

7. Système selon la revendication 4, 5 ou 6,
**caractérisé en ce que** la matière enroulée est emballée, tandis qu'un système d'éjection (10) transporte la matière enroulée vers une section de coupe (Q).

8. Système selon la revendication 4, 5, 6 ou 7,
**caractérisé en ce que** la matière enroulée, emballée et coupée est identique à l'emballage final pour le consommateur de tissus de nettoyage jetables.

9. Tissus de nettoyage jetables en mousse de polyuréthane réalisés par le procédé ou dans le système selon une quelconque des revendications précédentes,
**caractérisés en ce que** les tissus de nettoyage jetables sont munis de perforations de déchirure (41 ), enroulés et emballés dans ledit état enroulé.
